# EUROPÄISCHE PATENTSCHRIFT

(11) **EP 0 335 260 B1**
(45) Veröffentlichungstag und Bekanntmachung des Hinweises auf die Patenterteilung: **14.07.1993**
(21) Anmeldenummer: 89105221.9
(22) Anmeldetag: 23.03.1989
(51) Int. Cl.: D21C 5/02

(54) **Flotationsverfahren zum De-inken von bedrucktem Altpapier**
Flotation process for de-inking waste printed paper
Procédé de désencrage de vieux papier imprimé par flottation

(30) Priorität: 31.03.1988 DE 3811025
(43) Veröffentlichungstag der Anmeldung: 04.10.1989
(73) Patentinhaber: Chemische Fabrik Grünau GmbH, D-89251 Illertissen (DE)
(72) Erfinder: Lehmann, Klaus, D-7918 Illertissen (DE); Domsch, Andreas, Dr., D-7918 Illertissen (DE); Hawel, Hans, D-7917 Vöhringen (DE); Schuster, Gregor, D-7910 Neu-Ulm (DE)

(56) Entgegenhaltungen:
- EP-A- 0 067 333
- DE-A- 667 722
- DE-A- 969 809
- DE-C- 3 702 978
- FR-A- 1 390 686

## Beschreibung

Die Erfindung betrifft ein Flotationsverfahren zum De-inken von bedrucktem Altpapier durch Behandeln des Papierstoffes im Stofflöser bei alkalischen pH-Werten mittels Alkalimetallsilikat, oxidativ wirkenden Bleichmitteln, Diethylentriaminpentaessigsäure, Alkalimetallsalz- und/oder Aminsalzlösungen von Eiweißfettsäurekondensaten oder Dispersionen von Erdalkalimetallsalzen von Eiweißfettsäurekondensaten sowie Ausscheiden der abgelösten Druckfarbenteilchen aus der Faserstoffsuspension durch Flotation.

Unter De-inken versteht man die selektive Entfernung von Druckfarben aus der Altpapierfasersuspension. Der so gewonnene Gutstoff wird in Abhängigkeit vom jeweiligen Ausgangsmaterial zu Endprodukten, z.B. Schreibpapier, Druckpapier, Hygienepapier, etc., verarbeitet.

Wesentliche Fakten beim De-inking-Verfahren sind, daß zunächst die Druckfarben im Stofflöser von der Faser mittels geeigneter Chemikalien abgelöst und anschließend aus der Fasersuspension selektiv ausgeschieden werden. Dieses geschieht sowohl beim Flotations- als auch beim Wasch-De-inking in alkalischem Milieu, wobei die Druckfarbenentfernung in Flotationszellen bzw. Wäschern erfolgt. Der resultierende Gutstoff wird dann der Produktion zugeführt.

Eine üblicherweise verwendete Chemikalienrezeptur kann hierbei wie folgt aussehen: (Dosierungen jeweils bezogen auf Trockenstoff des Altpapiers)
0,5 bis 2,0 Gew.-% Alkalimetallhydroxid (100 %ig)
0,2 bis 1,5 Gew.-% Seife oder Fettsäure (100 %ig)
0,05 bis 0,1 Gew.-% nichtionogener Dispergator (100 %ig)
2,0 bis 5,0 Gew.-% Alkalimetallsilikat (Wasserglas)
0,1 bis 0,3 Gew.-% Diethylentriaminpentaessigsäure-Na-Salz (DTPA) (40 %ig)
0,5 bis 3,0 Gew.-% oxidatives Bleichmittel (100 %ig)
Die Wirkungsmechanismen der einzelnen Chemikalien beim Flotationsprozeß sind hierbei die folgenden:

Alkalimetallhydroxid, vorzugsweise Natriumhydroxid, bewirkt eine Faserquellung und erleichtert somit die Auflösung des Faserverbandes sowie die Druckfarbenabtrennung. Diese wird durch Neutralisation bzw. Verseifung von Druckfarbenbindemitteln zusätzlich begünstigt. Außerdem liefert Natriumhydroxid die zur Neutralisation von Fettsäuren erforderliche Alkalität, die zu deren Funktion als Sammler erforderlich ist.

Nichtionogene Dispergiermittel bewirken durch Absenkung der Oberflächenspannung des Wassers eine verbesserte Faserbenetzung, wodurch unter anderem die Wirkung der anderen Chemikalien begünstigt wird, im wesentlichen jedoch die Ablösung der Druckfarben und deren Dispergierung erfolgt. Durch die Dispergierung der Druckfarben wird eine Wiederanlagerung an die Faser verhindert bzw. erschwert.

Durch den Sammler, d.h. üblicherweise Fettsäuren oder Seifen, werden die abgelösten Pigmente hydrophobiert, wodurch eine selektive Entfernung möglich wird. Für diese Funktion sind bei den bisher verwendeten anionaktiven Sammlern neben dem alkalischen Milieu die Härtebildner des Wassers von entscheidender Bedeutung, da nur deren Calciumsalze eine Hydrophobierung der Druckfarbenpartikel bewirken und diese so flotierbar machen. Oxidative Bleichmittel verhindern bzw. kompensieren die Vergilbung des holzhaltigen Altpapieranteiles und bewirken darüber hinaus - je nach Dosierung - eine zusätzliche Faserbleiche. Zu deren Stabilisierung werden Alkalisilikat und DTPA (Diethylentriaminpentaessigsäure) eingesetzt, die durch Komplexierung der Schwermetalle eine zu schnelle Zersetzung des Bleichmittels verhindern.

Als Altpapiere kommen je nach angestrebtem Endprodukt Zeitungen, Illustrierte, Computerpapiere, Akten etc., in den meisten Fällen jedoch deren Mischungen zum Einsatz, wobei über deren De-inkbarkeit die angewandten Druckfarbensysteme neben deren Alter eine entscheidende Rolle spielen.

Die Beurteilung des Papiers nach dem De-inking-Prozeß erfolgt über eine Weißgradmessung, wobei der Weißgehalt des Prüfblattes mit dem eines Standards (z.B. Bariumsulfat bei Weißgradmessung nach Elrepho) verglichen und in Prozent angegeben wird. Bei Verwendung einer Altpapiermischung aus Tageszeitungen-Illustrierten im Verhältnis 1 : 1 resultiert z.B. ein Weißgehalt von 56 bis 60 %, wobei der Weißgehalt der unbedruckten Randstreifen dieser Altpapiere ca. 65 bis 68 % beträgt.

Die DE-A- 29 03 150 beschreibt ein Verfahren zum De-inken von bedrucktem Altpapier durch Behandeln des Papierstoffes im Stofflöser bei alkalischen pH-Werten mittels Alkalisilikat, oxidativ wirkenden Bleichmitteln, höheren Fettsäuren oder deren Salzen und nichtionogenen Dispergiermitteln und Ausscheiden der abgelösten Druckfarbenteilchen aus der Farbstoffsuspension durch Flotation, wobei man im Stofflöser zusätzlich ein Fettsäurealkanolamid verwendet.

Demgegenüber beschreibt die DE-C- 31 23 353 ein ähnliches Verfahren, das sich von dem der vorgenannten DE-A- 29 03 150 dadurch unterscheidet, daß im Stofflöser kein Fettsäurealkanolamid verwendet wird und zum anderen dadurch, daß die Fettsäuren und/oder Harzsäuren und die Dispergiermittel in Form einer Öl-in-Wasser-Emulsion zugesetzt werden.

Die bekannten Verfahren weisen jedoch einige Nachteile auf.

Bei Einsatz von festen Fettsäuren als Sammler benötigt man Schmelzvorrichtungen oder aber beheizte Lagerbehälter, wenn diese bereits geschmolzen angeliefert werden.

Die Beheizung entfällt, wenn Fettsäuren verwendet werden, deren Schmelzpunkte unter dem Normaltemperaturbereich liegen, wobei diese jedoch meistens anwendungstechnische Nachteile aufweisen.

Bei den Reaktionsbedingungen im Stofflöser verseifen die höher schmelzenden und flüssigen Fettsäuren nur langsam, wobei die an der Oberfläche der Fettsäurepartikel entstehenden Seifen die weitere Verseifung der eingeschlossenen Fettsäuren erschweren bzw. sogar verhindern. Dieser Tatbestand hat nicht nur eine Verminderung des Sammlereffektes zur Folge, sondern kann über eine Faserhydrophobierung durch die unverseiften Fettsäuren zu verstärkter Faserflotation und Filzverschmutzungen führen.

Um diese Nachteile zu umgehen, werden gemäß dem Stand der Technik den Lagertanks Verseifungsanlagen nachgeschaltet. Die resultierenden wäßrigen Seifenlösungen müssen dann bis zur Verarbeitung permanent getempert werden, da diese bei Normaltemperatur Gele bilden, d.h. der Zwischenlagerbehälter sowie die Dosierleitungen inklusive Dosierkopf der Dosierpumpe müssen thermisch isoliert und durchgehend beheizt werden.

Werden feste Seifen eingesetzt, erübrigt sich eine Verseifungsanlage. Da die vollständige Löslichkeit der Seifengranulate unter den prozeßabhängigen Bedingungen in den meisten Fällen nicht gegeben ist, müssen zur Verhinderung von Negativeffekten Löseanlagen installiert werden. Für die hierbei resultierenden Seifenlösungen gelten dann wieder die vorstehend beschriebenen Nachteile.

Ein weiterer beträchtlicher Nachteil der bekannten Verfahren ist ferner darin zu sehen, daß die vorstehend erörterte Bildung von Calciumseifen der Fettsäuren - die ja erst als Sammler wirksam werden - erst während des De-inking-Prozesses im Stofflöser mit dem Härtebildner des eingesetzten Wassers sukzessiv erfolgt. Die hierfür benötigte Reaktionszeit verlängert mithin die insgesamt erforderliche Prozeßdauer; eine unvollständige Umsetzung bedingt zudem schlechtere De-inking-Resultate, die sich beispielsweise auch in verminderten Weißgraden widerspiegeln. Diese Nachteile weisen auch solche Verfahren auf, bei denen die Fettsäuren in Form einer Emulsion eingesetzt werden.

Ferner wird in der DE-C-969'809 ein Verfahren zur Regeneration von Altpapier mittels einer alkalischen wäßrigen Flotte beschrieben. Die hierbei zu verwendenden Flotten enthalten: a) Wasserglas, b) mindestens eine sauerstoffabgebende Verbindung, wie Wasserstoffperoxid, Natriumperoxid, Perborat, Percarbonat, c) mindestens ein Stickstoff in amid- oder sulfonamidartiger Bindung enthaltendes Schutzkolloid, d) mindestens eine stickstofffreie organische Verbindung mit Netz- und Waschwirkung. Als Schutzkolloid (Komponente c) kommt ein Kondensationsprodukt eines löslichen Eiweißstoffes oder eines höhermolekularen Eiweißspaltproduktes mit einer seifenbildenden Fett-, Harz- oder Naphthensäure oder mit einer aliphatischen oder aliphatisch-aromatischen Sulfonsäure in Frage. Als stickstofffreie Netz- und Waschmittel werden insbesondere alkylbenzolsulfonsaure Salze mit 10 bis 18 C-Atomen im Alkylrest verwendet. Die bei diesem Verfahren als Schutzkolloid eingesetzten Verbindungen bewirken eine Verminderung der ansonsten zu beobachtenden Faserschädigung bzw. Faserverluste.

Bei dem in dieser deutschen Patentschrift beschriebenen Verfahren handelt es sich um das sogenannte "Wasch-de-inken", bei welchem die Druckfarben beim Aufschlagen des Altpapiers möglichst gut dispergiert werden. Die Druckfarben verbleiben in der Flotte und werden anschließend zusammen mit der Flotte in nachgeschalteten Entwässerungsstufen ausgewaschen.

Demgegenüber handelt es sich bei dem erfindungsgemäßen Verfahren um das sogenannte "Flotations-de-inken", bei welchem die unterschiedliche Benetzbarkeit von Druckfarbe und Papierfaser zur Trennung ausgenutzt wird. Die hydrophobe Druckfarbe wird geflockt und gesammelt und schließlich im Flotationsschaum abgeschieden.

Einzelheiten über die Unterschiede beider De-inking-Verfahren finden sich beispielsweise in:
"Ullmans Encyklopädie der technischen Chemie", 4. Auflage, Band 17 (1979), Seiten 570 bis 572, sowie in "Tappi" (Technical Association of the Pulp and Paper Industry), Band 63 (1980), Nr. 9, Seiten 113 bis 116. Hiernach besteht der wesentliche Unterschied zwischen Waschverfahren und Flotationsverfahren im Farbaustragungsprinzip. Die eigentliche De-inking-Chemikalie beim Waschverfahren ist ein waschaktives Dispergiermittel, dessen Aufgabe es ist, eine stabile Dispersion von abgelösten Druckfarbenteilchen zu erzeugen und ein Wiederanlagern dieser Teilchen an die Fasern zu verhindern. Demgegenüber ist beim Flotationsverfahren die eigentliche De-inking-Chemikalie der sogenannte Sammler, welcher die Aufgabe hat, ein spezifisches Anlagern der Druckfarbenteilchen an die Luftblasen zu bewirken. Beide Verfahren sind mithin weder als solche noch im Hinblick auf die Wirkungsweise der eingesetzten Chemikalien miteinander vergleichbar.

Im Hinblick auf den vorstehend erörterten Stand der Technik ist es die Aufgabe der vorliegenden Erfindung, ein verbessertes Flotationsverfahren zum De-inken von bedrucktem Altpapier zur Verfügung zu stellen, welches die vorstehend erörterten Nachteile nicht aufweist und darüber hinaus zu hervorragenden Weißgraden führt. Insbesondere bestand die Aufgabe der vorliegenden Erfindung auch darin, den Einsatz von Eiweißfettsäurekondensaten als Sammler zu ermöglichen, wobei auf Schmelzvorrichtungen oder beheizte Lagerbehälter verzichtet werden kann.

Die vorstehende Aufgabe wird dadurch gelöst, daß man beim Flotationsverfahren zum De-inken von bedrucktem Altpapier im Stofflöser Eiweißfettsäurekondensate in Form ihrer Alkalimetall- und/oder Aminsalze gegebenenfalls in Kombination mit Dispergiermitteln molekular verteilt in einer bei Normaltemperatur flüssigen wäßrigen Lösung oder in Form ihrer Erdalkalimetallsalze in feiner Verteilung gegebenenfalls zusammen mit Dispergiermittel in einer bei Normaltemperatur flüssigen Dispersion einsetzt.

Die Erfindung betrifft somit ein Flotationsverfahren zum De-inken von bedrucktem Altpapier durch
(a) Behandeln des Papierstoffes im Stofflöser bei alkalischen pH-Werten mittels Alkalimetallsilikat, oxidativ wirkenden Bleichmitteln, Diethylentriaminpentaessigsäure und
(b) Ausscheiden der abgelösten Druckfarbenteilchen aus der Faserstoffsuspension durch Flotation,
dadurch gekennzeichnet, daß man im Stofflöser Eiweißfettsäurekondensate in Form ihrer Alkalimetall- und/oder Aminsalze molekular verteilt in einer bei Normaltemperatur flüssigen wäßrigen Lösung oder in Form ihrer Erdalkalimetallsalze in feiner Verteilung in einer bei Normaltemperatur flüssigen Dispersion einsetzt.

Gemäß einer weiteren Ausführungsform der vorliegenden Erfindung ist das Flotationsverfahren zum De-inken von bedrucktem Altpapier dadurch gekennzeichnet, daß man Eiweißfettsäurekondensate der allgemeinen Formel I 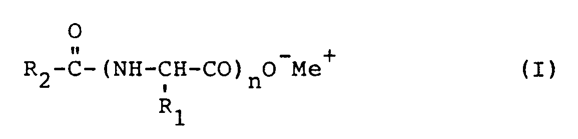
und/oder der allgemeinen Formel II 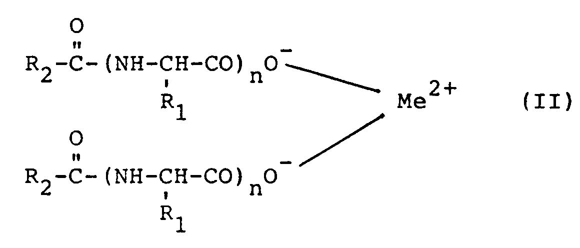
einsetzt, wobei
- R₁: für eine Seitenkette der Aminosäuren eines Polypeptids,
- R₂: für einen Alkyl-, Alkenyl-, Hydroxyalkyl- oder Hydroxyalkenylrest mit 8 bis 22 C-Atomen, vorzugsweise mit 12 bis 18 C-Atomen, steht, der linear, verzweigt, geradzahlig, ungeradzahlig oder kondensiert-polycylisch ist oder für Mischungen der genannten lipophilen Reste,
- Me⁺: für einen Alkalimetallrest oder einen organischen Aminrest steht,
- Me²⁺: für einen Erdalkalimetallrest steht und
- n: eine ganze Zahl von 1 bis einschließlich 50 ist.

Als Alkalimetallreste der Eiweißfettsäurekondensate können Natriumsalze, Kaliumsalze, Lithiumsalze oder deren Gemische ebenso wie Ammoniumsalze verwendet werden.

Als organische Aminreste der Eiweißfettsäurekondensate können beispielsweise Monoethanolaminsalze, Diethanolaminsalze, Triethanolaminsalze, Morpholinsalze und/oder deren Gemische verwendet werden.

Als Erdalkalimetallsalze der Eiweißfettsäurekondensate kommen beispielsweise die entsprechenden Salze von Magnesium, Calcium, Strontium oder Barium bzw. Gemische derselben in Frage. Bevorzugt werden die Eiweißfettsäurekondensate jedoch in Form ihrer Calciumsalze eingesetzt. Wenn in den nachfolgenden Ausführungen daher nur noch von Calciumsalzen die Rede ist, so beziehen sich diese Ausführungen in gleicher Weise auch auf die übrigen Erdalkalimetallsalze.

Beim Einsatz von Eiweißfettsäurekondensaten in Form ihrer Alkali- und/oder Aminsalze - gemäß der Erfindung - hat der Tatbestand, daß diese in ihren wäßrigen Lösungen bereits molekular verteilt vorliegen, zur Folge, daß keine Reaktionszeit für die Umsetzung mit dem Alkalihydroxid der Chemikalienflotte erforderlich ist, was bei den bisher eingesetzten, auf Fettsäure basierenden, anionaktiven Sammlern eine Voraussetzung für ihre Funktion ist. Es kommt daher spontan zu einer vollständigen Umsetzung in die mit Hilfe der Wasserhärtebildner entstehenden Calciumsalze, die dann als selektive Druckfarbensammler wirken. Die außerordentliche Feinheit der Flockung und deren produktspezifische Eigenschaften gewährleisten hierbei einen ausgezeichneten Sammlereffekt.

Beim Einsatz von Eiweißfettsäurekondensaten in Form ihrer Erdalkalimetallsalze gemäß der Erfindung ist hingegen keine Reaktionszeit für die Umsetzung mit dem Alkalimetallhydroxid der Chemikalienflotte und den Härtebildnern des Wassers erforderlich, was bei den bisher eingesetzen, auf Fettsäure bzw. Seifen basierenden, anionaktiven Sammlern eine Voraussetzung für ihre Funktion ist. Das erfindungsgemäße Verfahren erlaubt daher auch die Verwendung von weichem Wasser. Die sehr feine Verteilung der Calciumsalze und deren produktspezifische Eigenschaften gewährleisten hierbei einen ausgezeichneten Sammlereffekt, der u.a. auch in verbesserten Weißgraden zum Ausdruck kommt.

Eiweißfettsäurekondensat-Salzlösungen, Dispersionen von Eiweißfettsäurekondensat-Erdalkalimetallsalzen sowie deren Kombinationen mit Dispergatoren können ohne jede Vorbehandlung direkt aus dem Lagertank an beliebiger Stelle in den De-inking Prozeß eingebracht werden, da die erforderliche Umsetzung entweder spontan erfolgt, oder - sofern Calciumsalze zum Einsatz kommen - keine Umsetzung mehr erforderlich ist, wodurch die Sammlerfunktion spontan ausgeübt wird. Dadurch entstehen auch beim Stoffaufschlag im Hochkonsistenzbereich bei Stoffdichten von 15 bis 20 % keinerlei Nachteile. Auch eine Zugabe erst unmittelbar vor dem De-inking Aggregat wird ohne Nachteile möglich.

Aufgrund ihrer erhöhten Oberflächenaktivität bewirken die Eiweißfettsäurekondensat-Salzlösungen, Dispersionen von Eiweißfettsäurekondensat-Erdalkalimetallsalzen sowie deren Kombinationen mit Dispergatoren eine ausgezeichnete Ablösung und Sammlung der Druckfarbenpartikel.

Die im Sinne der Erfindung zu verwendenden Eiweißfettsäurekondensate sind aus dem Stand der Technik bekannt. Sie werden beispielsweise beschrieben in "Seifen, Öle, Fette, Wachse", Band 91 (1965), Seiten 477 bis 482.

Die Herstellung dieser Eiweißfettsäurekondensate kann zum Beispiel in dem nachstehend beschriebenen, zweistufigen Verfahren erfolgen:
A) Herstellung der Eiweißhydrolysate;
B) Kondensation der Eiweißhydrolysate nach Schotten-Baumann mit Fettsäurechloriden.

### A) Herstellung der Eiweißhydrolysate

die Eiweißhydrolysate werden durch saure oder alkalische Hydrolyse von collagenhaltigem Material hergestellt.

### Saure Hydrolyse von collagenhaltigem Material

In einem geeigneten Reaktor wird das collagenhaltige Material mit verdünnter Schwefelsäure versetzt und ca. 8 bis 10 Stunden bei 85 bis 95 °C hydrolysiert. Nach Beendigung der Hydrolyse wird der Ansatz mit einer Calciumhydroxiddispersion versetzt, wodurch die Polypeptide in die Calciumsalze überführt werden und das Aufschlußmaterial als Calciumsulfat gefällt wird. Die Dispersion wird filtriert. Im Filtrat erhält man eine klare Lösung von Calciumpeptiden.

Diese Lösung kann eingedampft werden und nach der Aufkonzentrierung direkt mit den Fettsäurechloriden zu Eiweißfettsäurekondensatcalciumsalzen kondensiert werden.

Zur Herstellung von Alkalisalzen der Eiweißfettsäurekondensate benötigt man die Natrium- bzw. Kaliumsalze der Eiweißhydrolysate. Diese erhält man, indem man die Calciumpeptidelösungen mit Natriumcarbonat bzw. Kaliumcarbonat umfällt, das ausgefällte Calciumcarbonat abfiltriert und das so erhaltene Natrium- bzw. Kalium-Eiweißhydrolysat aufkonzentriert und dann mit Fettsäurechlorid kondensiert.

### Alkalische Hydrolyse

In einem geeigneten Reaktor wird das collagenhaltige Material mit einer Calciumhydroxiddispersion versetzt, 6 bis 10 Stunden bei 85 bis 95 °C hydrolysiert und das aufgeschlossene Material vom Rückstand filtriert. Das Filtrat enthält Calciumpeptide, die nach der Aufkonzentrierung direkt mit Fettsäurechlorid zu Eiweißkondensaten umgesetzt werden können.

Bei der Herstellung von Alkalisalzen der Eiweißfettsäurekondensate wird die Calciumpeptidlösung, wie bereits vorstehend ausgeführt, mit Natriumcarbonat bzw. Kaliumcarbonat umgefällt, der entstehende Niederschlag abfiltriert und die Lösung eingedampft. Die Alkalipeptide können dann mit Fettsäurechloriden kondensiert werden.

### B) Herstellung der Eiweißfettsäurekondensate

Die Herstellung der Eiweißfettsäurekondensate geschieht, wie bereits erwähnt, nach Schotten-Baumann. Hierzu wird eine alkalisch gestellt Eiweißlösung mit Fettsäurechloriden versetzt. Das Verfahren wird wie folgt durchgeführt:

In einem geeigneten Rührkessel legt man die Eiweißhydrolysatlösung vor, stellt alkalisch und läßt dann bei einer Temperatur von 40°C bis 60°C die entsprechende Menge Fettsäurechlorid zulaufen, wobei die bei der Kondensation entstehende Salzsäure durch weitere Zugabe von Alkali abgefangen wird.

Nach beendigter Zugabe der beiden Chemikalien läßt man ungefähr eine Stunde nachreagieren, stellt dann das Material auf die gewünschte Trockensubstanz und pH-Wert ein.

Die so hergestellten Eiweißfettsäurekondensatlösungen können dann gemäß der Erfindung für den De-inking-Prozeß eingesetzt werden.

Als eiweißhaltiges Material können hierbei alle Proteine tierischer oder pflanzlicher Art Verwendung finden, beispielsweise Sojaprotein, Keratin oder insbesondere Collagen selbst.

Der lipophile Rest der Eiweißfettsäurekondensate kann aus Alkyl-, Alkenyl-, Hydroxyalkyl- bzw. Hydroxyalkenylresten mit 8 bis 22 C-Atomen bestehen, die linear, verzweigt, geradzahlig, ungeradzahlig oder kondensiert-polycyclisch sein können. Auch können Mischungen der genannten Reste verwendet werden. Bevorzugt sind solche Reste mit 12 bis 18 C-Atomen. Als Beispiele für die im Sinne der Erfindung einzusetzenden Kohlenwasserstoffreste seien genannt: Fettsäuren mit 12 bis 18 C-Atomen, einzeln oder im Gemisch, Talgfettsäure, Kokosfettsäure, synthetische Fettsäuren mit Säurezahlen im Bereich von 190 bis 200, Abietinsäure, tierische Fettsäuren mit 12 bis 18 C-Atomen oder destillierte Pflanzenmischölfettsäure, die beispielsweise die folgende C-Kettenverteilung aufweist:
ca. 3% C₁₂-Laurinfettsäure
ca. 10/12 % C₁₄-Myristinsäure
ca. 15/20 % C₁₆-Palmitinsäure
ca. 18/25 % C₁₈-Stearinsäure
ca. 45/50 % C₁₈-Ölsäure
ca. 5 % C₁₈-Linolsäure
Wenn im Zusammenhang mit Eiweißfettsäurekondensaten von "Normaltemperatur" die Rede ist, so sind hierunter übliche Umgebungs- bzw. Raumtemperaturen zu verstehen, die gegebenenfalls von beispielsweise +4 bis +30 °C reichen können. Das De-inking-Verfahren selbst wird vorzugsweise bei Temperaturen im Bereich von 40 bis 50 °C durchgeführt; selbstverständlich sind die wäßrigen Lösungen oder die Dispersionen auch in diesem Temperaturbereich flüssig.

Die Erdalkalimetallsalze der Eiweißfettsäurekondensate liegen in der Dispersion in einer derartig feinen Verteilung vor, wie sie für stabile Dispersionen erforderlich bzw. üblich ist.

Im Sinne der vorliegenden Erfindung werden vorzugsweise Eiweißfettsäurekondensat-Lösungen oder Dispersionen mit einem Feststoffanteil von 10 bis 50 Gew.-%, bezogen auf die Gesamtdispersion, eingesetzt. Hierbei sind Feststoffanteile von 30 bis 45 Gew.-%, bezogen auf die Gesamtdispersion, besonders bevorzugt.

Im Sinne der Erfindung ist es weiterhin bevorzugt, daß man wäßrige Lösungen oder Dispersionen mit einem Gehalt von 70 bis 100 Gew.-% an Eiweißfettsäurekondensat-Salzen, bezogen auf den vorstehend angegebenen Feststoffanteil, einsetzt.

Die im Sinne der Erfindung zu verwendenden wäßrigen Lösungen oder Dispersionen können ferner nichtionische und/oder anionische Dispergiermittel enthalten. Hierbei sind nichtionische Dispergiermitel bevorzugt, die nachträglich beigefügt werden. Dabei werden, bezogen auf die Eiweißfettsäurekondensate, vorzugsweise 1 bis 40 Gew.-% nichtionische und/oder anionische Dispergiermittel eingesetzt. Werden anionische Dispergiermittel eingesetzt, so betragen diese üblicherweise 1 bis 40 Gew.-%, bezogen auf die Eiweißfettsäurekondensat-Salze.

Als nichtionische Dispergiermittel können beispielsweise Alkylpolyglykolether, iso-Alkylpolyglykolether, Hydroxyalkylpolyglykolether, Alkenylpolyglykolether, Alkylarylpolyglykolether, Acylpolyglykolester und Polyoxyethylenglycerinfettsäureester, mit jeweils 8 bis 22 C-Atomen im Kohlenwasserstoffrest und 6 bis 30 Mol Ethylenoxid, verwendet werden.

Als anionaktive Dispergiermittel können beispielsweise Alkylsulfonate, Alkylarylsulfonate, Alkylsulfate, Alkylpolyglykolethersulfate und Alkylarylpolyglykolethersulfate verwendet werden. Der Ethylenoxidanteil der Alkylpolyglykolethersulfate und Alkylarylpolyglykolethersulfate beträgt 2 bis 25 Mol. Die genannten anionaktiven Dispergiermittel weisen Kohlenwasserstoffreste mit 8 bis 22 C-Atomen auf. Die anionaktiven Dispergiermittel kommen üblicherweise in Form ihrer Alkali- und/oder Aminsalze zur Anwendung.

Gemäß einer speziellen Ausführungsform der vorliegenden Erfindung führt man das Flotationsverfahren zum De-inken von bedrucktem Altpapier in der Weise aus, daß man im Stofflöser eine Kombination der folgenden Komponenten einsetzt:
- (a) 0,5 bis 2 Gew.-%: Natriumhydroxid (100 %ig);
- (b) 2 bis 5 Gew.-%: Alkalimetallsilikat
- (c) 0,1 bis 0,3 Gew.-%: Diethylentriaminpentaessigsäure-Natriumsalz (DTPA) (40 %ige wäßrige Lösung);
- (d) 0,5 bis 3 Gew.-%: Wasserstoffperoxid (100 %ig);
- (e) 0,2 bis 1,5 Gew.-%: Eiweißfettsäurekondensat-Alkalisalzlösung oder -Aminsalzlösung oder Dispersion von Eiweißfettsäurekondensations-Erdalkalimetallsalzen;
- (f) 0 bis 0,1 Gew.-%: nichtionische Dispergiermittel.

Hierbei beziehen sich die angegebenen Mengen jeweils auf die Menge des eingesetzten Altpapiers.

Als Alkalimetallsilikate (Komponente b) kommen in der Regel handelsübliche Wasserglaslösungen - Natron- und/oder Kaliwassergläser - zum Einsatz. Bevorzugt werden hierbei Natronwassergläser mit einem Gewichtsverhältnis SiO₂/Na₂O von 3,3 : 1. Die zu verwendenden Lösungen oder Dispersionen (Komponente e) entsprechen den vorstehenden Ausführungen.

Zusätzlich zu den Dispergiermitteln, die eventuell in den Eiweißfettsäurekondensat-Lösungen oder Eiweißfettsäurekondensat-Dispersionen enthalten sind, können gegebenenfalls weitere nichtionische Dispergiermittel (Komponente f) im Verfahren eingesetzt werden. Hinsichtlich der Art der hier zu verwendenden nichtionischen Dispergiermittel gelten die vorstehenden Ausführungen in gleicher Weise. Hierbei ist es bevorzugt, daß man 0,05 bis 0,1 Gew.-% an nichtionischen Dispergiermitteln, gleichfalls bezogen auf Altpapier, einsetzt; insbesondere C₈₋₂₂-Alkyl-polyglykolether und/oder C₈₋₂₂-Acylpolyglykolester, jeweils mit 6 bis 30 Mol Ethylenoxid.

Die Erfindung wird anhand der nachfolgenden Beispiele erläutert.

### Beispiele

100 g atro (= 110 g lutro) bedrucktes Altpapier (atro = absolut trocken; lutro = lufttrocken), bestehend aus 100 % Tageszeitungen, wurden in 1890 ml wäßrige Chemikalienflotte einge tragen und bei einer Temperatur von ca. 45 °C mittels Dispergierscheibe (2500 UpM) 15 min aufgeschlagen. Der Härtegrad des verwendeten Wassers lag bei ca. 17 °d.

Die eingesetzten Chemikalien und deren Konzentrationen waren - jeweils bezogen auf Trockenstoff des Altpapiers - wie folgt:
1,0 % Natriumhydroxid (100 %ig)
3,0 % Natronwasserglas (Gew.-Verh. SiO₂/Na₂O = 3,3:1)
0,2 % DTPA (Handelsware, 40 %ig)
0,85 % Wasserstoffperoxid (100 %ig)
x % Sammler (siehe Beispiele und Vergleichsbeispiele)
Die jeweilige Zusammensetzung des "Sammlers" wurde variiert und ist aus den nachstehenden Beispielen gemäß der Erfindung sowie den Vergleichsbeispielen ersichtlich.

Die Reaktionszeit nach dem Stoffaufschlag betrug 2 h, entsprechend der Quellzeit in den Bütten.

Anschließend wird die 5 %ige Stoffsuspension mit Wasser von ca. 17 °d auf 4000 ml aufgefüllt und 5 min entstippt.

Die entstippte Stoffsuspension wurde in einer Laborflotationszelle mit Wasser obigen Härtegrades bis zur Höhe des Schaumüberlaufes der Zelle aufgefüllt und anschließend 10 min flotiert, wobei durch Wasserzugabe das Niveau in Höhe des Schaumüberlaufes gehalten wurde.

Der resultierende Gutstoff wurde dann auf ca. 20 % Stoffdichte eingedickt.

Der eingedickte Gutstoff wurde durch Zugabe von 800 ml Wasser von ca. 17 °d auf eine Stoffdichte von ca. 4 % verdünnt, aufgeschlagen und mit verdünnter Schwefelsäure auf pH-Wert 6 angesäuert.

Von dieser Stoffsuspension wurden dann 100 g mit Wasser auf 500 ml aufgefüllt, woraus eine Stoffdichte von ca. 0,8 % resultierte, und über ein Filterblatt (∅ 12 cm) abgenutscht. Das so entstandene Blatt wurde nach der Glättung getrocknet. Die Weißgradmessung erfolgte nach Elrepho R 457.

Für die nachstehenden Beispiele wurde jeweils ein Eiweißfettsäurekondensat auf Basis eines Collagen-Hydrolysats mit einem durchschnittlichen Molgewicht von 100 bis 5000 eingesetzt, d.h. R₁ entspricht einem Polypeptidrest eines hydrolysierten Collagens und n liegt im Bereich von 1 bis 50.

### Beispiel 1

Es wurde wie vorstehend beschrieben gearbeitet. Als Sammler kamen 0,7 Gew.-% einer ca. 33 %igen, wäßrigen Kaliumsalzlösung eines Eiweißfettsäurekondensats zum Einsatz beim dem R₂ dem Kohlenwasserstoffrest einer Isostearinsäure entsprach. Weißgrad: 57,8 %

### Beispiel 2

Es wurde wie vorstehend beschrieben gearbeitet. Als Sammler kamen 0,35 Gew.-% einer ca. 40 %igen, wäßrigen Lösung, bestehend aus
- 90 Teilen: einer ca. 33 %igen, wäßrigen Kaliumsalzlösung eines Eiweißfettsäurekondensats, bei dem R₂ dem Kohlenwasserstoffrest einer Kokosfettsäure entsprach und
- 10 Teilen: Alkylpolyglykolether - 20 EO
zum Einsatz.
Weißgrad: 58,3 %

### Beispiel 3

Es wurde wie vorstehend beschrieben gearbeitet. Als Sammler kamen 0,35 Gew.-% einer ca. 40 %igen, wäßrigen Lösung, bestehend aus
- 90 Teilen: einer ca. 33 %igen, wäßrigen Kaliumsalzlösung eines Eiweißfettsäurekondensats, bei dem R₂ dem Kohlenwasserstoffrest einer Kokosfettsäure entsprach und
- 10 Teilen: Acylpolyglykolester - 20 EO
zum Einsatz.
Weißgrad: 57,9 %

### Beispiel 4

Es wurde wie vorstehend beschrieben gearbeitet. Als Sammler kamen 0,35 Gew.-% einer ca. 40 %igen, wäßrigen Lösung, bestehend aus
- 90 Teilen: einer ca. 33 %igen, wäßrigen Kaliumsalzlösung eines Eiweißfettsäurekondensats, bei dem R₂ dem Kohlenwasserstoffrest einer destillierten Pflanzenmischölfettsäure entsprach und
- 10 Teilen: Polyoxyethylenglycerinfettsäureester - 20 EO
zum Einsatz.
Weißgrad: 60,6 %

### Beispiel 5

Es wurde wie vorstehend beschrieben gearbeitet. Als Sammler kamen 0,7 Gew.-% einer ca. 38 %igen Calciumsalz-Dispersion eines Eiweißfettsäurekondensats zum Einsatz, bei dem R₂ dem Kohlenwasserstoffrest einer Kokosfettsäure entsprach.
Weißgrad: 58,5 %

### Beispiel 6

Es wurde wie vorstehend beschrieben gearbeitet. Als Sammler kamen 0,7 Gew.-% einer ca. 38 %igen Calciumsalz-Dispersion eines Eiweißfettsäurekondensats zum Einsatz, bei dem R₂ dem Kohlenwasserstoffrest einer Pflanzenmischölfettsäure entsprach.
Weißgrad: 57,8 %

### Beispiel 7

Es wurde wie vorstehend beschrieben gearbeitet. Als Sammler kamen 0,7 Gew.-% einer ca. 38 %igen Calciumsalz-Dispersion eines Eiweißfettsäurekondensats zum Einsatz, bei dem R₂ dem Kohlenwasserstoffrest einer Abietinsäure entsprach.
Weißgrad: 57,7 %

### Beispiel 8

Es wurde wie vorstehend beschrieben gearbeitet. Als Sammler kamen 0,7 Gew.-% einer ca. 38 %igen Calciumsalz-Dispersion eines Eiweißfettsäurekondensats zum Einsatz, bei dem R₂ dem Kohlenwasserstoffrest einer Ölsäure (JZ 88 - 92) entsprach.
Weißgrad: 58,1 %

### Beispiel 9

Es wurde wie vorstehend beschrieben gearbeitet. Als Sammler kamen 0,7 Gew.-% einer ca. 38 %igen Calciumsalz-Dispersion eines Eiweißfettsäurekondensats zum Einsatz, bei dem R₂ dem Kohlenwasserstoffrest einer Isostearinsäure entsprach.
Weißgrad: 58,9 %

### Beispiel 10

Es wurde wie vorstehend beschrieben gearbeitet. Als Sammler kamen 0,35 Gew.-% einer ca. 44 %igen Calciumsalz-Dispersion, bestehend aus
- 90 Teilen: einer ca. 38 %igen Calciumsalz-Dispersion eines Eiweißfettsäurekondensats, bei dem R₂ dem Kohlenwasserstoffrest einer Kokosfettsäure entsprach und
- 10 Teilen: Alkylpolyglykolether - 20 EO
zum Einsatz.
Weißgrad: 57,8 %

### Beispiel 11

Es wurde wie vorstehend beschrieben gearbeitet. Als Sammler kamen 0,35 Gew.-% einer ca. 44 %igen Calciumsalz-Dispersion, bestehend aus
- 90 Teilen: einer ca. 38 %igen Calciumsalz-Dispersion eines Eiweißfettsäurekondensats, bei dem R₂ dem Kohlenwasserstoffrest einer Kokosfettsäure entsprach und
- 10 Teilen: Alkylpolyglykolethersulfat-Na-Salz
zum Einsatz.
Weißgrad: 58,0 %

### Vergleichsbeispiel 1

Es wurde wie vorstehend beschrieben gearbeitet, wobei als Sammler 0,7 Gew.-% handelsübliche De-inking-Seife (Natrium-Seife von C₁₀₋₁₈-Fettsäuren) zum Einsatz kamen.
Weißgrad: 57,4 %

### Vergleichsbeispiel 2

Es wurde wie vorstehend beschrieben gearbeitet, als Sammler kamen 0,7 Gew.-% einer handelsüblichen Emulsion von Fettsäuren und/oder Harzsäuren mit mehr als 10 C-Atomen zum Einsatz. Weißgrad: 55,9 %.

Wie die Vergleichsbeispiele - die dem Stand der Technik entsprechen - zeigen, resultieren bei der Durchführung des Verfahrens in der erfindungsgemäßen Art und Weise erheblich bessere Weißgrade, wobei zu berücksichtigen ist, daß in der Praxis eine Steigerung des Weißgrades um nur 1 % eine beträchtliche Verbesserung darstellt. Anders ausgedrückt besagt dies, daß sich - bei gleicher Prozeßdauer - bei dem Verfahren gemäß dem Stand der Technik insgesamt schlechtere De-inking-Resultate ergeben. Demgegenüber erfolgt beim erfindungsgemäßen Verfahren eine sofortige selektive Flotation, die auch in den höheren Weißgrad-Werten zum Ausdruck kommt.

### Vergleichsbeispiel 3

Die folgenden Vergleichsversuche betreffen die vorstehend erörterte DE-C-969 809, in welcher unter anderem der Einsatz von Eiweißfettsäure-Kondensationsprodukten beim Wasch-de-inken beschrieben wird. Demgegenüber wurden die folgenden Vergleichsversuche im Flotationsverfahren - wie es im Sinne der Erfindung angewendet wird - durchgeführt.

Für die Versuche wurde ein Altpapier, bestehend zu 100 % aus farbig bedrucktem Illustrationsdruckpapier (Weißgrad 46,5 %) eingesetzt.

### Versuch 3.1 (erfindungsgemäß)

Chemikalienrezeptur und Versuchsdurchführung analog dem vorstehenden Beispiel 1. Es resultierte ein Weißgrad von 59,9 %.

Der Unterschied zwischen dem hier erhaltenen Weißgrad und dem gemäß Beispiel 1 erklärt sich aus der Tatsache, daß bei Beispiel 1 ein anderes Altpapier eingesetzt wurde.

### Versuch 3.2 (Vergleich)

Ein Eiweißfettsäurekondensat analog Versuch 3.1 wurde in entmineralisiertem Wasser in einer Rezeptur gemäß Beispiel 2 der oben genannten deutschen Patentanmeldung eingesetzt. Das Altpapier wurde für 2 h bei 75 °C im Pulper behandelt und nachfolgend in einer Laborflotationszelle aufbereitet.

Es trat eine sehr starke Schaumbildung auf. Ein Großteil des Schaumes wurde entfernt, um den weiteren Verfahrensablauf zu gewährleisten. Es resultierte ein Weißgrad von 50,4 %.

### Versuch 3.3 (Vergleich)

Durchführung analog Versuch 3.2; es wurde mit rückgeführtem Wasser (Rückwasser) aus Versuch 3.2 nach Entfernen des Schaumes gearbeitet und - soweit erforderlich - mit entmineralisiertem Frischwasser ergänzt. Resultat: Starkes Schäumen wie in Versuch 3.2; erzielter Weißgrad 49,35 %.

### Versuch 3.4 (Vergleich)

Durchführung analog Versuch 3.2; es wurde mit Rückwasser aus Versuch 3.3 nach Entfernen des Schaumes gearbeitet und - soweit erforderlich - mit entmineralisiertem Frischwasser ergänzt. Resultat: Erneut starkes Schäumen; erzielter Weißgrad 49 %.

### Resultat

Die vorstehenden Vergleichsversuche zeigen, daß die in DE-C-969 809 beschriebene Rezeptur bei der Durchführung eines Flotationsverfahrens zum De-inken von Altpapier zu ungenügenden Ergebnissen führt. Die starke Schaumbildung behindert erheblich eine optimale Flotation der abgelösten Druckfarbenteilchen. Dies zeigt sich im - gegenüber Versuch 3.1 - verringerten Weißgrad bei Versuch 3.2.

Hinzu kommt, daß in der Praxis beim Flotationsverfahren - schon aus Gründen des Umweltschutzes - mit einem geschlossenen Kreislaufwassersystem gearbeitet und das rückgeführte Wasser zum Stoffaufschlag einer neuen Altpapier-Charge eingesetzt wird. Der gebildete Schaum verbleibt jedoch im Kreislauf und führt zu einer zunehmenden Verschmutzung des rückgeführten Wassers. Dies zeigt sich in den verringerten Weißgraden der Versuche 3.3 und 3.4 - im Vergleich zu Versuch 3.2.

Der Fachmann kann der Lehre dieser deutschen Patentanmeldung mithin nicht die Anregung entnehmen, die dort als Schutzkolloid beschriebenen Eiweißfettsäure-Kondensationsprodukte im Sinne der vorliegenden Erfindung in einem Flotationsverfahren einzusetzen.

## Patentansprüche

1. Flotationsverfahren zum De-inken von bedrucktem Altpapier durch
a) Behandeln des Papierstoffes im Stofflöser bei alkalischen pH-Werten mittels Alkalimetallsilikat, oxidativ wirkenden Bleichmitteln, Diethylentriaminpentaessigsäure und
b) Ausscheiden der abgelösten Druckfarbenteilchen aus der Faserstoffsuspension durch Flotation,
dadurch gekennzeichnet, daß man im Stofflöser Eiweißfettsäurekondensate in Form ihrer Alkali- und/oder Aminsalze molekular verteilt in einer bei Normaltemperatur flüssigen wäßrigen Lösung oder in Form ihrer Erdalkalimetallsalze in feiner Verteilung in einer bei Normaltemperatur flüssigen Dispersion einsetzt.

2. Verfahren nach Anspruch 1, dadurch gekennzeichnet, daß man Eiweißfettsäurekondensate der allgemeinen Formel I 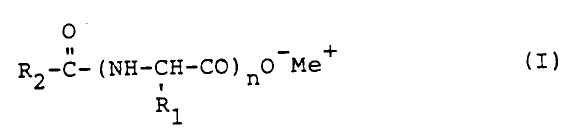 und/oder der allgemeinen Formel II 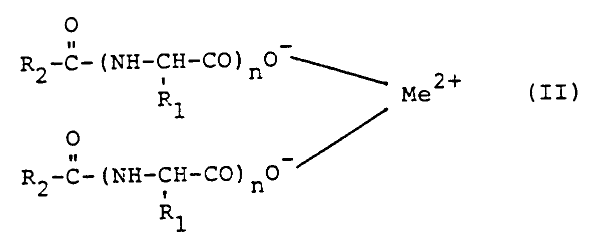 einsetzt, wobei
R₁ für eine Seitenkette der Aminosäuren eines Polypeptids,
R₂ für einen Alkyl-, Alkenyl-, Hydroxyalkyl- oder Hydroxyalkenylrest mit 8 bis 22 C-Atomen, vorzugsweise mit 12 bis 18 C-Atomen, steht, der linear, verzweigt, geradzahlig, ungeradzahlig oder kondensiert-polycylisch ist oder für Mischungen der genannten lipophilen Reste,
Me⁺ für einen Alkalimetallrest oder einen organischen Aminrest steht,
Me²⁺ für einen Erdalkalimetallrest steht und
n eine ganze Zahl von 1 bis einschließlich 50 ist.

3. Verfahren nach Anspruch 2, dadurch gekennzeichnet, daß man Eiweißfettsäurekondensate in Form ihrer Natriumsalze, Kaliumsalze, Ammoniumsalze, Lithiumsalze und/oder deren Gemische verwendet.

4. Verfahren nach Anspruch 2, dadurch gekennzeichnet, daß man Eiweißfettsäurekondensate in Form ihrer Monoethanolaminsalze, Diethanolaminsalze, Triethanolaminsalze, Morpholinsalze und/oder deren Gemische verwendet.

5. Verfahren nach Anspruch 2, dadurch gekennzeichnet, daß man Eiweißfettsäurekondensate in Form ihrer Magnesiumsalze, Calciumsalze, Strontiumsalze, Bariumsalze und/oder deren Gemische, vorzugsweise in Form ihrer Calciumsalze, verwendet.

6. Verfahren nach Ansprüchen 1 bis 5, dadurch gekennzeichnet, daß man Eiweißfettsäurekondensate verwendet, deren Fettsäurereste sich von Talgfettsäure, Kokosfettsäure sowie synthetischen Fettsäuren mit Säurezahlen im Bereich von 190 bis 200, Abietinsäure und insbesondere tierischen Fettsäuren mit 12 bis 18 C-Atomen ableiten.

7. Verfahren nach Ansprüchen 1 bis 6, dadurch gekennzeichnet, daß man Lösungen und/oder Dispersionen der Eiweißfettsäurekondensate mit einem Feststoffgehalt von 10 bis 50 Gew.-%, vorzugsweise 30 bis 45 Gew.-%, bezogen auf die Gesamtdispersion, einsetzt.

8. Verfahren nach Ansprüchen 1 bis 7, dadurch gekennzeichnet, daß man Lösungen und/oder Dispersionen der Eiweißfettsäurekondensate mit einem Gehalt von 70 bis 100 Gew.-% an Eiweißfettsäurekondensaten, bezogen auf den Feststoffgehalt, einsetzt.

9. Verfahren nach Ansprüchen 1 bis 8, dadurch gekennzeichnet, daß man Lösungen und/oder Dispersionen der Eiweißfettsäurekondensate mit einem Gehalt von 1 bis 40 Gew.-% nichtionischen und/oder anionischen Dispergiermitteln, bevorzugt nichtionischen Dispergiermitteln, bezogen auf die Alkalimetall und/oder Aminsalze und/oder Erdalkalimetallsalze der Eiweißfettsäurekondensate einsetzt.

10. Verfahren nach Ansprüchen 1 bis 9, dadurch gekennzeichnet, daß man die nichtionischen Dispergiermittel auswählt aus der Gruppe Alkylpolyglykolether, iso-Alkylpolyglykolether, Hydroxyalkylpolyglykolether, Alkenylpolyglykolether, Alkylarylpolyglykolether, Acylpolyglykolester und Polyoxyethylenglycerinfettsäureester, mit jeweils 8 bis 22 C-Atomen im Kohlenwasserstoffrest und 6 bis 30 Mol Ethylenoxid.

11. Verfahren nach Ansprüchen 1 bis 9, dadurch gekennzeichnet, daß man die anionaktiven Dispergiermittel auswählt aus der Gruppe Alkylsulfonate, Alkylarylsulfonate, Alkylsulfate, Alkylpolyglykolethersulfate mit 2 bis 25 Mol Ethylenoxid und Alkylarylpolyglykolethersulfate mit 2 bis 25 Mol Ethylenoxid.

12. Verfahren nach Ansprüchen 1 bis 11, dadurch gekennzeichnet, daß man im Stofflöser eine Kombination folgender Komponenten, jeweils bezogen auf Altpapier, einsetzt:
(a) 0,5 bis 2 Gew.-% Natriumhydroxid (100 %ig),
(b) 2 bis 5 Gew.-% Alkalimetallsilikat,
(c) 0,1 bis 0,3 Gew.-% Diethylentriaminpentaessigsäure-Natriumsalz (40 %ige wäßrige Lösung)
(d) 0,5 bis 3 Gew.-% Wasserstoffperoxid (100 %ig)
(e) 0,2 bis 1,5 Gew.-% Eiweißfettsäurekondensat-Alkalisalzlösung und/oder -Aminsalzlösung oder Dispersion von Eiweißfettsäurekondensat-Erdalkalimetallsalz
(f) 0 bis 0,1 Gew.-% nichtionische Dispergiermittel.

13. Verfahren nach Anspruch 12, dadurch gekennzeichnet, daß man als Komponente (f) 0,05 bis 0,1 Gew.-% C₈₋₂₂-Alkyl-polyglykolether und/oder C₈₋₂₂-Acylpolyglykolester, jeweils mit 6 bis 30 Mol Ethylenoxid, einsetzt.

## Claims

1. A flotation process for deinking printed wastepaper by
a) treatment of the paper stock in a pulper at alkaline pH values with alkali metal silicate, oxidative bleaches, diethylenetriamine pentaacetic acid and
b) separation of the detached printing ink particles from the fibre suspension by flotation,
characterized in that protein fatty acid condensates are used in the form of their alkali metal and/or amine salts in molecular dispersion in an aqueous solution liquid at normal temperature or in the form of their alkaline earth metal salts in a dispersion liquid at normal temperature.

2. A process as claimed in claim 1, characterized in that protein fatty acid condensates corresponding to general formula I 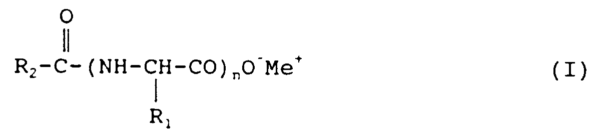 and/or to general formula II 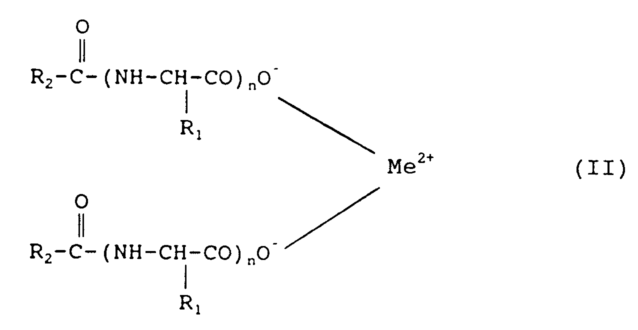 in which
R₁ represents a side chain of the aminoacids of a polypeptide,
R₂ represents an alkyl, alkenyl, hydroxyalkyl or hydroxyalkenyl radical containing 8 to 22 C atoms and preferably 12 to 18 C atoms, which is branched, linear, odd-numbered or condensed-polycyclic, or mixtures of the lipophilic radicals mentioned,
Me⁺ is an alkali metal or an organic amine,
Me²⁺ is an alkaline earth metal and
n is an integer of 1 to 50 inclusive,
are used.

3. A process as claimed in claim 2, characterized in that protein fatty acid condensates in the form of their sodium salts, potassium salts, ammonium salts, lithium salts and/or mixtures thereof are used.

4. A process as claimed in claim 2, characterized in that protein fatty acid condensates in the form of their monoethanolamine salts, diethanolamine salts, triethanolamine salts, morpholine salts and/or mixtures thereof are used.

5. A process as claimed in claim 2, characterized in that protein fatty acid condensates in the form of their magnesium salts, calcium salts, strontium salts, barium salts and/or mixtures thereof are used.

6. A process as claimed in claims 1 to 5, characterized in that protein fatty acid condensates of which the fatty acid components are derived from tallow fatty acid, coconut oil fatty acid and synthetic fatty acids having acid values of 190 to 200, abietic acid and, in particular, animal fatty acids containing 12 to 18 C atoms are used.

7. A process as claimed in claims 1 to 6, characterized in that solutions and/or dispersions of the protein fatty acid condensates having a solids content of 10 to 50% by weight and preferably 30 to 45% by weight, based on the dispersion as a whole, are used.

8. A process as claimed in claims 1 to 7, characterized in that solutions and/or dispersions of the protein fatty acid condensates containing 70 to 100% by weight protein fatty acid condensates, based on the solids content, are used.

9. A process as claimed in claims 1 to 8, characterized in that solutions and/or dispersions of the protein fatty acid condensates containing 1 to 40% by weight nonionic and/or anionic dispersants, preferably nonionic dispersants, based on the alkali metal and/or amine salts and/or alkaline earth metal salts of the protein fatty acid condensates, are used.

10. A process as claimed in claims 1 to 9, characterized in that the nonionic dispersants are selected from the group consisting of alkyl polyglycol ethers, isoalkyl polyglycol ethers, hydroxyalkyl polyglycol ethers, alkenyl polyglycol ethers, alkylaryl polyglycol ethers, acyl polyglycol esters and polyoxyethylene glycerol fatty acid esters containing 8 to 22 carbon atoms in the hydrocarbon radical and 6 to 30 mol ethylene oxide.

11. A process as claimed in claims 1 to 9, characterized in that the anionic dispersants are selected from the group consisting of alkyl sulfonates, alkylaryl sulfonates, alkyl sulfates, alkyl polyglycolether sulfates containing 2 to 25 mol ethylene oxide and alkylaryl polyglycol ether sulfates containing 2 to 25 mol ethylene oxide.

12. A process as claimed in claims 1 to 11, characterized in that a combination of the following components, based in each case on wastepaper, is used in the pulper:
(a) 0.5 to 2% by weight sodium hydroxide (100%),
(b) 2 to 5% by weight alkali metal silicate,
(c) 0.1 to 0.3% by weight diethylenetriamine pentaacetic acid sodium salt (40% aqueous solution),
(d) 0.5 to 3% by weight hydrogen peroxide (100%),
(e) 0.2 to 1.5% by weight protein fatty acid condensate alkali metal salt solution and/or amine solution or dispersion of protein fatty acid condensate alkaline earth metal salt,
(f) 0 to 0.1% by weight nonionic dispersants.

13. A process as claimed in claim 12, characterized in that 0.05 to 0.1% by weight C₈₋₂₂ alkyl polyglycol ether and/or C₈₋₂₂ acyl polyglycol ester containing 6 to 30 mol ethylene oxide is used as component (f).

## Revendications

1. Procédé de flottation pour le désencrage du vieux papier imprimé par :
a) traitement de la pâte à papier dans un agent dissolvant à des valeurs de pH alcalines à l'aide de silicate de métal alcalin, d'agents de blanchiment agissant comme oxydants, de l'acide diéthylène triaminopentaacétique, et
b) séparation des particules de couleurs d'impression détachées de la suspension de produit fibreux par flottation,
caractérisé en ce que l'on met en oeuvre dans un agent solubilisant des condensats d'acides gras et d'albumine sous forme de leurs sels de métal alcalin et/ou d'amines répartis moléculairement dans une solution aqueuse liquide à température ordinaire ou sous forme de leurs sels de métal alcalino-terreux en fine dispersion dans une dispersion liquide à température ordinaire.

2. Procédé selon la revendication 1, caractérisé en ce que l'on met en oeuvre des condensats d'acides gras et d'albumine de formule générale (I) : 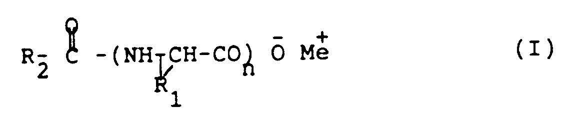 et ou de formule générale (II) 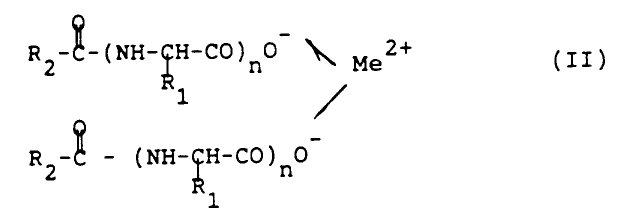 dans lesquelles
R₁ représente une chaîne latérale d'aminoacides d'un polypeptide,
R₂ représente un radical alcoyle, alcényle, hydroxyalcoyle ou hydroxyalcényle, ayant de 8 à 22 atomes de carbone, de préférence de 12 à 18 atomes de carbone, qui est linéaire, ramifié, d'ordre pair ou impair ou polycyclique condensé
on représente des mélanges de radicaux lipophiles mentionnés,
Me⁺ représente un radical de métal alcalin ou un radical d'amine organique
Me²⁺ représente un radical de métal alcalino-terreux,
et n est un nombre entier allant de 1 à 50 inclus.

3. Procédé selon la revendication 2, caractérisé en ce que l'on utilise des condensats d'acide gras et d'albumine sous forme de leurs sels de sodium, de potassium, d'ammonium, de lithium, et/ou de leurs mélanges.

4. Procédé selon la revendication 2, caractérisé en ce que l'on utilise des condensats d'acide gras et d'albumine sous forme de leurs sels de monoéthanolamine, de leurs sels de diéthanolamine, de leurs sels de triéthanolamine, de leurs sels de morpholine, et/ou de leurs mélanges.

5. Procédé seleon la revendication 2, caractérisé en ce que l'on utilise des condensats d'acide gras et d'albumine sous forme de leurs sels de magnésium, de leurs sels de calcium, de leurs sels de strontium, de leurs sels de baryum et/ou de leurs mélanges, de préférence sous forme de leurs sels de calcium.

6. Procédé selon les revendications 1 à 5, caractérisé en ce que l'on utilise des condensats d'acide gras et d'albumine dont les radicaux acide gras dérivent d'acide gras de suif, d'acide gras de coco, ainsi que d'acide gras synthétiques ayant des indices d'acidité dans la zone allant de 190 à 200, des acide abiétiques et en particulier d'acide gras animaux ayant de 12 à 18 atomes de carbone.

7. Procédé selon les revendications 1 à 6, caractérisé en ce que l'on met en oeuvre des solutions et/ou des dispersions de condensats d'acide gras et d'albumine ayant une teneur en solides de 10 à 50 % en poids - de préférence de 30 à 45 % en poids rapporté à la dispersion totale.

8. Procédé selon les revendications 1 à 7, caractérisé en ce que l'on met en oeuvre des solutions et/ou des dispersions des condensats d'acide gras et d'albumine ayant une teneur allant de 70 à 100 % en poids en condensats d'acide gras et d'albumine rapporté à la teneur en solides.

9. Procédé selon les revendications 1 à 8, caractérisé en ce que l'on met en oeuvre des solutions et/ou des dispersions de condensats d'acide gras et d'albumine ayant une teneur allant de 1 à 40 % en poids d'agents dispersants non ioniques et/ou anioniques, de préférence des agents dispersants non ioniques, rapporté aux sels de métaux alcalin et/ou aux sels d'amine et/ou aux sels de métal alcalino-terreux des condensats d'acide gras et d'albumine.

10. Procédé selon les revendications 1 à 9, caractérisé en ce que l'on choisit les agents dispersants non ioniques dans le groupe formé des éthers d'alcoylpolyglycol, des éthers d'iso-alcoylpolyglycol, des éthers d'hydroxyalcoylpolyglycol, des éthers d'alcénylpolyglycol, des esters d'alcoylarylpolyglycol, des esters d'alcoylpolyglycol et des esters d'acide sgras et de polyoxyéthylèneglycérol, ayant respectivement de 8 à 22 atomes de carbone dans le radical hydrocarboné et de 6 à 30 mol d'oxyde d'éthylène.

11. Procédé selon les revendications 1 à 9, caractérisé en ce que l'on choisit l'agent dispersant à anion actif, dans le groupe formé des alcoylsulfonates, des alcoylarylsulfonates, des alcoylsulfates, des alcoylpolyglycoléthersulfates avec 2 à 25 mol d'oxyde d'éthylène et des alcoylarylpolyglycoléthersulfates avec 2 à 25 mol d'oxyde d'éthylène.

12. Procédé selon les revendications 1 à 11, caractérisé en ce que l'on met en oeuvre dans l'agent dissolvant une combinaison des composés suivants, rapportés à chaque fois au vieux papier :
a) 0,5 à 2 % en poids d'hydroxyde de sodium (à 100 %),
b) 2 à 5 % en poids de silicate de métal alcalin,
c) 0,1 à 0,3 % en poids de sel de sodium d'acide diéthylène triaminopentaacétique (solution aqueuse à 40 %),
d) 0,5 à 3 % en poids de peroxyde d'hydrogène (à 100 %),
e) 0,2 à 1,5 % en poids de solution de sel de métal alcalin et/ou de sel d'amine de condensat d'acide gras et d'albumine, ou de dispersion de sel de métal alcalino-terreux de condensat d'acide gras et d'albumine,
f) 0 à 0,1 % en poids d'agent dispersant non ionique.

13. Procédé seleon la revendication 12, caractérisé en ce que l'on met en oeuvre comme composant f) de 0,05 à 0,1 % en poids d'alcoyl en C₈ à C₂₂ polyglycoléther et/ou d'acyl en C₈ à C₂₂ polyglycolester, respectivement avec 6 à 30 mol d'oxyde d'éthylène.
